Europäisches Patentamt

European Patent Office

Office européen des brevets

(19)

(11) Veröffentlichungsnummer: **0 312 740 B1**

(12) **EUROPÄISCHE PATENTSCHRIFT**

(45) Veröffentlichungstag der Patentschrift: **30.10.91**

(51) Int. Cl.⁵: **G01L 19/14**, F02D 41/00

(21) Anmeldenummer: **88113897.8**

(22) Anmeldetag: **25.08.88**

(54) **Druckwandler mit einer Schaltungsplatine, insbesondere zur Steuerung eines Kraftfahrzeugs.**

(30) Priorität: **24.09.87 DE 3732192**

(43) Veröffentlichungstag der Anmeldung:
**26.04.89 Patentblatt 89/17**

(45) Bekanntmachung des Hinweises auf die
Patenterteilung:
**30.10.91 Patentblatt 91/44**

(84) Benannte Vertragsstaaten:
**DE ES FR GB IT**

(56) Entgegenhaltungen:
**DE-U- 8 025 282      DE-U- 8 706 854**
**NL-A- 8 602 361      US-A- 4 202 081**
**US-A- 4 557 225      US-A- 4 732 044**

(73) Patentinhaber: **SIEMENS AKTIENGESELL-
SCHAFT
Wittelsbacherplatz 2
W-8000 München 2(DE)**

(72) Erfinder: **Zlamal, Vlastimil
Schwabelweiser Weg 42
W-8400 Regensburg(DE)**

## Beschreibung

Die Erfindung betrifft ein Steuergerät insbesondere für ein Kraftfahrzeug gemäß Oberbegriff von Anspruch 1.

Ein solches Steuergerät ist z. B. in der DE 3013 760 beschrieben. Dort hat der Drucksensor ein Druckaufnehmerelement, das in oder auf einer Schaltungsplatine befestigt ist.

Das Druckaufnehmerelement muß dabei auf der Schaltungsplatine mit einem Anschlußtrichter abgedeckt und gegenüber der Umgebung abgedichtet werden. Dabei können die Schaltungsplatine oder darauf befindliche Bauteile beschädigt werden. Außerdem muß der Anschlußtrichter aus dem Gehäuse für die Steuereinrichtung herausragen, um einen Druckschlauch anschließen zu können. Damit werden aber die im rauhen Betrieb einer Brennkraftmaschine am Gehäuse auftretenden Vibrationen direkt auf die empfindliche Schaltungsplatine übertragen.

Ein solcher Drucksensor aus Druckaufnehmerelement und darübergestülptem abgedichteten Anschlußtrichter benötigt außerdem viel Platz auf der Schaltungsplatine. Diese und damit das sie aufnehmende Gehäuse muß dementsprechend groß gebaut sein, was der zunehmenden Tendenz zur kleineren Bauform entgegenläuft.

Ein weiteres Problem des Standes der Technik besteht beim erforderlichen Abgleich der Kennlinie des Drucksensors. Dazu muß bei fertig montiertem Drucksensor der Zugriff auf die elektrischen Anschlüsse des Drucksensors gewährleistet sein, um eine entsprechende Abgleicheinrichtung anschließen zu können.

Gleichzeitig müssen auch die auf der Schaltungsplatine befindlichen Abgleichelemente zugänglich sein, über die die Druckkennlinie einstellbar ist.

Eine Lösung für dieses Problem bestand darin, daß man die elektrischen Anschlüsse des Drucksensors nach außen aus dem Gehäuse herausführte. An diesen äußeren Anschlüssen konnte bei der Produktion die Abgleicheinrichtung leichter angeschlossen werden, anstatt diese auf der empfindlichen Schaltungsplatine anschließen zu müssen. Dieses Verfahren erleichterte gleichzeitig den Zugang zu den Abgleichelementen auf der Schaltungsplatine im Innern des Gehäuses.

Die nach außen geführten Anschlüsse stellen jedoch einen zusätzlichen Kostenfaktor dar, zumal sie nach dem Abgleich vergossen werden müssen, um Korrosionseinflüsse zu vermeiden.

Ein anderes bekanntes Druckmeßgerät (US-A 4 732 044) weist ein Druckmeßelement in Form einer Keramikscheibe auf, auf der Dehnungsmeßstreifen angeordnet sind, deren Widerstand sich bei Verbiegung der Membran ändert. Die Auswertung der Änderungen der in einer Brückenschaltung angeordneten Widerstände erfolgt in einer auf einer Leiterplatte aufgebrachten Schaltungsanordnung. Die Keramikscheibe und die Schaltungsplattine sind in einem aus einem Boden und Deckel bestehenden Gehäuse untergebracht. Der elektrische Abgleich des Druckmeßgerätes erfolgt durch Verdrehen eines Drehpotentiometers, der in einem in dem Gehäusedeckel vorgesehenen besonderen Zylindergehäuse untergebracht ist.

Ein weiterer bekannter Druckgeber für ein Kraftfahrzeug (DE-U 8025282) weist ein Meßelement in Form einer Doppelmembrandose auf, die in ihrer Mitte einen Dauermagneten trägt. Diesem liegt axial gegenüber ein Hall-IC, der auf einer Isolierstoff-Tragplatte sitzt. Um einen möglichst linearen Zusammenhang zwischen den durch die zu messenden Druckschwankungen verursachten Abstandsänderungen des Dauermagneten von dem Hall-IC und den sich dabei ändernden Induktionswerten zu erreichen, ist an der vom Dauermagneten abgekehrten Rückseite des Hall-IC ein zweiter Dauermagnet vorgesehen. Dieser zweite Dauermagnet ist zur Einstellung des Geräte-Nullpunktes über ein Gewinde axial verstellbar.

Es ist deshalb Aufgabe der Erfindung ein Steuergerät mit einem Drucksensor derart aufzubauen, daß die vorbeschriebenen Nachteile vermieden werden. Insbesondere soll der Abgleich des Drucksensors bei der Produktion besonders einfach sein, und trotzdem eine sehr kompakte Bauweise des Steuergeräts erreicht werden.

Die erfindungsgemäße Lösung ist im Anspruch 1 gekennzeichnet. Vorteilhafte Weiterbildungen der Erfindung sind in den abhängigen Ansprüchen gekennzeichnet.

Ein Grundgedanke der Erfindung besteht darin, als Drucksensor einen handelsüblichen fertig montierten Sensor mit Gehäuse zu verwenden und diesen derart in dem Gehäuse des Steuergeräts einzubauen, daß er die Schaltungsplatine nicht berührt. Dafür ist ein Halteteil vorgesehen, das in dem Gehäuse fixiert ist und den Drucksensor aufnimmt. Das Halteteil ist dabei so gestaltet und angeordnet, daß der Zugriff auf die Abgleichelemente auf der Schaltungsplatine frei bleibt.

Die Schaltungsplatine und damit das sie aufnehmende Gehäuse kann also viel kleiner gebaut werden, da der Platzbedarf für den Drucksensor auf der Schaltungsplatine entfällt. Damit sind auch die Probleme einer eventuellen Beschädigung der Schaltungsplatine bei der Montage des Drucksensors beseitigt.

Die Erfindung wird anhand der Figuren erläutert; es zeigen:

FIG 1     einen Querschnitt durch ein erfindungsgemäßes Steuergerät entlang Linie I-I in FIG 2

FIG 2 eine Draufsicht auf ein Gehäuseunterteil des Steuergeräts, also bei abgenommenen Oberteil, und

FIG 3 einen Schnitt durch ein weiteres erfindungsgemäßes Steuergerät im Aufriß.

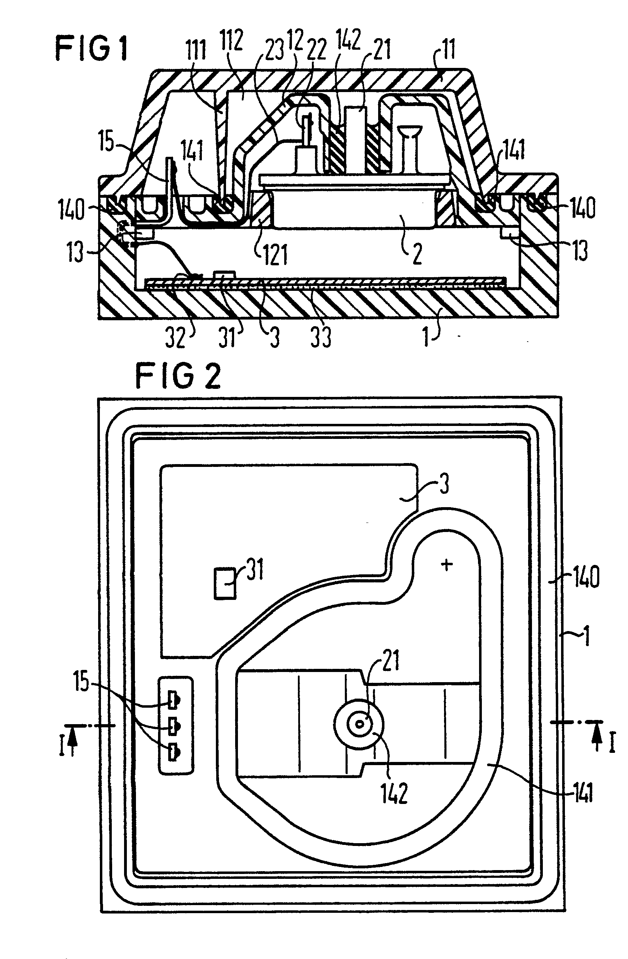

Die FIG 1 und 2 zeigen ein Steuergerät mit einem Gehäuse, das einen Innenraum druckdickt umschließt und aus einem Unterteil 1 und einem Oberteil 11 gebildet ist. Das Unterteil 1 ist eine rechteckige, nach oben offene Wanne, in der eine Schaltungsplatine 3 über eine wärmeleitende Klebeschicht 33 mit dem Boden des Unterteils 1 verbunden ist. Das Unterteil 1 ist in den Figuren als einstückiges Kunststoffteil dargestellt. Eine andere Ausführungsform hat zur besseren Wärmeabfuhr einen Metallboden und einen in bekannter Weise darauf aufgesetzten Kunststoffseitenteil. Die Schaltungsplatine 3 ist eine Dickschichtschaltung und trägt eine elektrische Schaltung mit diversen Bauteilen und Verbindungen, von denen in der Zeichnung nur ein elektrisches Abgleichelement 31 und einer der Platinenkontakte 32 dargestellt sind, über die die Schaltungsplatine 3 angeschlossen wird. Die Platinenkontakte 32 sind mit Leitbahnen verbunden, die in das Unterteil 1 eingegossen sind und elektrische Verbindungen wie z. B. zu in der Zeichnung nicht dargestellten Außensteckern, herstellen. In FIG 1 gestrichelt dargestellt ist eine derartige Verbindung zu einem von drei Gehäusekontakten 15, die für den elektrischen Abschluß eines Drucksensors 2 vorgesehen sind.

Der Drucksensor 2 ist ein handelsübliches Bauteil, wie es unter der Bezeichnung EP 3445 von der Firma Fuji erhältlich ist und ist in den Figuren nicht geschnitten dargestellt. Er hat einen zylindrischen Druckanschluß 21, der eine mittige Einlaßbohrung aufweist. Die Einlaßbohrung mündet in eine kreisrunde Meßdose, deren Kontur in FIG 1 dargestellt ist. Diese enthält ein druckempfindliches Element und Mittel zur Umsetzung des Drucks in elektrische Signale, die an drei elektrischen Anschlüssen 22 abnehmbar sind.

Der Drucksensor 2 ist in dem Unterteil 1 durch ein Halteteil 12 fixiert. Das Halteteil 12 bildet eine Art Zwischendecke, die genau in die Öffnung des Unterteils 1 paßt und auf am Unterteil 1 angegossenen Auflagestegen 13 aufliegt. Das Halteteil 12 ist zur Aufnahme des Drucksensors 2 haubenförmig aufgewölbt und umgreift den Druckanschluß 21 kreisförmig. Zum Fixieren des Drucksensors 2 in der haubenförmigen Aufwölbung dient ein Haltestück 121, das den Drucksensor 2 ringförmig umfaßt und zwei in FIG 1 nicht dargestellte Haltenasen hat, die in dem Halteteil 12 einrasten.

Das Halteteil 12 hat eine Aussparung, wie in FIG 2 sichtbar, die den Zugriff auf das auf der Schaltungsplatine 3 befindliche elektrische Abgleichelement 31 bei eingelegtem Halteteil 12 zuläßt. Die FIG 1 und 2 zeigen eine weitere Aussparung des Halteteils 12 durch die die drei Kontakte 15 hindurchragen. Durch diese Aussparung ragen auch drei Blechstreifen 23, die der Form des Halteteils 12 angepaßt sind und deren andere Enden an den elektrischen Anschlüssen 22 des Drucksensors 2 angeschlossen sind.

Das Oberteil 11 verschließt das Unterteil 1 druckdicht gegen die Umgebung, mit Hilfe einer Dichtung 140. Diese ist in einer endlosen Ausnehmung in der dem Oberteil 11 zugewandten Kante der Unterteilwandung angeordnet.

Vom Innenraum des Gehäuses teilt eine am Oberteil 11 angebrachte Wandung 111 einen Druckraum 112 ab. Der Druckraum 112 ist gegenüber dem Innenraum des Gehäuses durch die Dichtungen 141 und 142 abgedichtet. Die Wandung 111 drückt in die in FIG 2 gezeigte Dichtung 141 ein. Die Innenwandung 111 bildet somit mit einem Teil des Oberteils 11 eine Art Haube über den Druckanschluß 21 des Drucksensors 2. Eine weitere Dichtung 142 (Dichtmasse), umgibt kreisförmig den Druckanschluß 21 und dichtet den Druckraum 112 gegen das Sensorgehäuse ab.

Im Oberteil 11 befindet sich noch ein in den Figuren nicht dargestellter Anschluß für einen von außen kommenden Druckschlauch. Dieser Anschluß befindet sich über der in FIG 2 mit einem Kreuz gekennzeichneten Stelle. Der Anschluß auf dem Oberteil 11 und der Druckanschluß 21 des Drucksensors 2 sind also gegeneinander versetzt angeordnet. Damit bildet der Druckraum 112 eine Art Labyrinth, das dafür sorgt, daß über den Druckschlauch kommende Verunreinigungen und Kondenswasser nicht unmittelbar in den Drucksensor 2 gelangen können und plötzliche Druckstöße abgepuffert werden.

Ausgehend von dem Unterteil 1 und der darin montierten und elektrisch angeschlossenen Schaltungsplatine 3 ist nun die Montagefolge eines solchen erfindungsgemäßen Steuergeräts wie folgt:

- die Blechstreifen 23 werden an den elektrischen Anschlüssen 22 des Drucksensors 2 angeschweißt, zusammen mit dem Drucksensor 2 in das Halteteil 12 eingelegt und mit dem Haltestück 121 darin fixiert (Die Formgebung der Aufwölbung des Halteteils 12 gestattet das Einlegen des Drucksensors 2 nur in der in FIG 1 gezeigten Lage. Zusammen mit der Formgebung der Blechstreifen 23 ist damit gewährleistet, daß diese durch die vorgesehene Aussparung im Halteteil 12 hindurchragen.)

- das Halteteil 12 wird in die Öffnung des Unterteils 1 eingelegt. (Das Halteteil 12 kann nur richtig eingelegt werden, da die Anordnungen der Kontakte 15 am Unterteil 1 und der zugehörigen Aussparung am Halteteil 12 ein verdrehtes Einlegen nicht zulassen. Auch ein versehentliches Einlegen mit der Aufwölbung nach unten ist nicht möglich, da diese an der Schaltungsplatine 3 anstehen würde und so das Halteteil 12 keine definierte Lage einnehmen könnte. Die Lage von Drucksensor 2, Halteteil 12 und Unterteil 1 zueinander ist damit unverwechselbar festgelegt.)

- damit sind die Blechstreifen 23 bereits unverschiebbar den Kontakten 15 zugeordnet und können mit diesen verschweißt werden;
- der Abgleich des Drucksensors 2 wird durch die dem elektrischen Abgleichelement 31 zugeordnete Aussparung des Halteteils 12 durchgeführt;
- die Dichtmasse für die Dichtungen 140, 141 und 142 wird in einem Arbeitsgang aufgetragen;
- das Oberteil 11 wird aufgesetzt und mittels Schrauben befestigt.

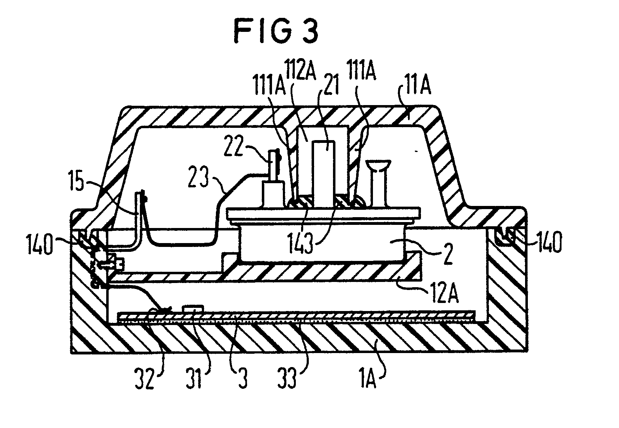

In FIG 3 ist eine Variante für ein erfindungsgemäß aufgebautes Steuergerät dargestellt, wobei gegenüber der FIG 1 gleichbleibende Teile mit gleichen Bezugszeichen versehen sind.

Im Unterschied zum Ausführungsbeispiel der FIG 1 ist hier ein anderes Halteteil 12A in Form einer Platte verwendet, auf der der Drucksensor 2 aufliegt. Das Halteteil 12A ist in dem Unterteil 1A befestigt und nur die zu gewährleistende Zugriffsmöglichkeit auf das elektrische Abgleichelement 31 und die nötige Auflage für den Drucksensor 2 beschränken die Ausführungsformen. Auch die Befestigung des Halteteils 12A in dem Unterteil 1A kann beliebig gewählt sein. Insbesondere kann das Halteteil 12A direkt an dem Unterteil 1A angegossen sein, oder mit diesem verklebt, verschraubt oder vernietet. Beispielhaft ist in der FIG 3 das Halteteil 12A als L-förmiges Winkelblech vorgesehen, dessen kürzerer Schenkel an dem Unterteil 1A angeschraubt ist. Der lange Schenkel des Halteteils 12A trägt den Drucksensor 2, der durch eine ringförmige Erhöhung am Halteteil 12A gegen Verrutschen gesichert ist.

Der Drucksensor 2 wird auf dem Halteteil 12A durch ein Oberteil 11A angedrückt. Die Bauform des Oberteils 11A ist analog dem Oberteil 11 mit Ausnahme einer Wandung 111A. Diese umgreift hier ringförmig den Druckanschluß 21 des Drucksensors 2 und bildet so mit dem Oberteil 11A wiederum einen Druckraum 112A, der gegenüber dem Innenraum des Gehäuses durch eine auf dem Sensorgehäuse ringförmig aufgebrachte Dichtung 143 abgedichtet ist. Beim Aufsetzen des Oberteils 11A wird die Wandung 111A in die Dichtmasse der Dichtung 143 eingedrückt und fixiert damit gleichzeitig den Drucksensor 2 auf dem Halteteil 12A.

**Patentansprüche**

1. Steuergerät, insbesondere für ein Kraftfahrzeug,
   - mit einem Gehäuse, das einen Innenraum druckdicht umschließt und aus einem Unterteil (1, 1A) und einem Oberteil (11, 11A) gebildet ist,
   - mit mindestens einem Kontakt (15) an der Innenseite des Unterteils (1, 1A),
   - mit einer Schaltungsplatine (3), die in dem Innenraum auf dem Unterteil (11, 11A) befestigt ist und ein elektrisches Abgleichelement (31) aufweist,
   - mit einem Drucksensor (2), der einen Druckanschluß (21) und einen elektrischen Anschluß (22) hat,

   **dadurch gekennzeichnet,**
   daß der Drucksensor (2) durch ein Halteteil (12, 12A) mit Abstand von der Schaltungsplatine (3) derart in dem Unterteil (1, 1A) fixiert ist, daß das Abgleichelement (31) bei abgenommenem Oberteil (11, 11A) frei zugänglich ist.

2. Steuergerät nach Anspruch 1,
   **dadurch gekennzeichnet,**
   - daß das Halteteil (12, 12A) eine Aufwölbung zur Aufnahme des Drucksensors (2) aufweist, die gegen die Schaltungsplatine (3) offen ist und eine Durchführung für den Druckanschluß (21) des Drucksensors (2) hat, und
   - daß der Drucksensor (2) in der Aufwölbung durch ein Haltestück (121) gehalten wird, das mit dem Halteteil (12, 12A) durch eine Rastverbindung verbunden ist.

3. Steuergerät nach Anspruch 2,
   **dadurch gekennzeichnet,**
   daß das Unterteil (1, 1A) Auflagestege (13) hat, auf denen das Halteteil (12, 12A) aufliegt.

4. Steuergerät nach Anspruch 3,
   **dadurch gekennzeichnet,**
   daß zwischen Drucksensor (2) und Halteteil (12, 12A) sowie zwischen Halteteil (12, 12A) und dem Unterteil (1, 1A) Führungsmittel vorgesehen sind, durch die die Lage dieser Teile zueinander fixiert ist.

5. Steuergerät nach Anspruch 4,
   **dadurch gekennzeichnet,**
   daß zwischen dem Oberteil (11, 11A) und dem Halteteil (12, 12A) ein Druckraum (112, 112A) liegt, in den von außen ein Anschluß und vom Innenraum her der Druckanschluß (21) des Drucksensors (2) münden, und daß der Druckraum (112, 112A) begrenzt ist durch die Außenwandungen der Aufwölbung und durch Wandungen (111, 111A) in dem Oberteil (11, 11A), die in eine Dichtung (141) in einer Rinne im Halteteil (12, 12A) hineinragen, die die Aufwölbung für den Drucksensor (2) außen umgibt.

6. Steuergerät nach Anspruch 2,
**dadurch gekennzeichnet,**
daß der Drucksensor (2) auf dem Halteteil (12, 12A) aufliegt und durch das Oberteil (11, 11A) gegen das Halteteil (12, 12A) angedrückt ist.

7. Steuergerät nach Anspruch 2,
**dadurch gekennzeichnet,**
daß das Halteteil (12, 12A) an das Unterteil (1, 1A) angegossen ist.

8. Steuergerät nach Anspruch 2,
**dadurch gekennzeichnet,**
daß das Halteteil (12, 12A) mit dem Unterteil (1, 1A) verbunden ist.

## Claims

1. Control unit, in particular for a motor vehicle,
   - having a casing, which encloses an inner cavity in a pressure-tight manner and is formed from a lower section (1, 1A) and an upper section (11, 11A),
   - having at least one contact (15) on the inner side of the lower section (1, 1A),
   - having a circuit board (3), which is mounted on the lower section (11, 11A) in the inner cavity and has an electrical adjusting element (31),
   - having a pressure sensor (2), which has a pressure connection (21) and an electrical connection (22),
   characterised in that the pressure sensor (2), is fixed by means of a holding section (12, 12A) at a distance from the circuit board (3) in the lower section (1, 1A) in such a manner that the adjusting element (31) is freely accessible with the upper section (11, 11A) removed.

2. Control unit according to Claim 1, characterised in that,
   - the holding section (12, 12A) has a bulge for retaining the pressure sensor (2), which is open to the circuit board (3) and has a duct for the pressure connection (21) of the pressure sensor (2), and
   - the pressure sensor (2) is held in the bulge by a holder (121) which is connected to the holding section (12, 12A) by means of a blocking connection.

3. Control unit according to Claim 2, characterised in that the lower section (1, 1A) has supporting bars (13), on which the holding section (12, 12A) rests.

4. Control unit according to Claim 3, characterised in that between the pressure centre (2) and the holding section (12, 12A) and between the holding section (12, 12A) and the lower section (1, 1A), guides are provided through which the position of these sections with respect to one another is fixed.

5. Control unit according to Claim 4, characterised in that between the upper section (11, 11A) and the holding section (12, 12A) there is a pressure cavity (112, 112A) into which open a connection from outside and the pressure connection (21) of the pressure sensor (2) from the inner cavity,
   and in that the pressure cavity (112, 112A) is bounded by the outer walls of the bulge and by walls (111, 111A) in the upper section (11, 11A), which project into a seal (141) in a groove in the holding section (12, 12A), which seal surrounds the bulge for the pressure sensor (2) on the outside.

6. Control unit according to Claim 2, characterised in that the pressure sensor (2) rests on the holding section (12, 12A) and is forced against the holding section (12, 12A) by the upper section (11, 11A).

7. Control unit according to Claim 2, characterised in that the holding section (12, 12A) is cast onto the lower section (1, 1A).

8. Control unit according to Claim 2, characterised in that the holding section (12, 12A) is connected to the lower section (1, 1A).

## Revendications

1. Appareil de commande, notamment pour un véhicule automobile, comportant
   - un boîtier, qui entoure, d'une manière étanche à la pression, un espace intérieur et qui est constitué d'une partie inférieure (1,1A) et une partie supérieure (11,11A),
   - au moins un contact (15) situé sur la face intérieure de la partie inférieure (1,1A),
   - une platine porte-circuit (3), qui est fixée dans l'espace intérieur de la partie inférieure (11,11A) et qui possède un élément d'équilibrage électrique (31),
   - un capteur de pression (2), qui possède un raccord de pression (21) et une borne électrique (22),

caractérisé par le fait que le capteur de pression (2) est fixé par une partie de retenue (12,12A) à distance de la platine porte-circuit (3), dans la partie inférieure (1,1A), de telle sorte que l'élément d'équilibrage (31) est librement accessible une fois que la partie supérieure (11,11A) est retirée.

2. Appareil de commande suivant la revendication 1, caractérisé par le fait
   - que la partie de retenue (12,12A) possède une partie cintrée servant à loger le capteur de pression (2) et qui est ouverte en direction de la platine porte-circuit (3) et possède une traversée pour le raccord de pression (21) du capteur de pression (2), et
   - que le capteur de pression (2) est maintenu dans la partie cintrée par un élément de retenue (121), qui est raccordé à la partie de retenue (12,12A) par une liaison à encliquetage.

3. Appareil de commande suivant la revendication 2, caractérisé par le fait que la partie inférieure (1,1A) possède des barrettes de support (13), sur lesquelles l'élément de retenue (12,12A) prend appui.

4. Appareil de commande suivant la revendication 3, caractérisé par le fait qu'entre le capteur de pression (2) et la partie de retenue (12,12A) ainsi qu'entre la partie de retenue (12,12A) et la partie inférieure (1,1A) sont prévus des moyens de guidage qui fixent la position réciproque de ces parties.

5. Appareil de commande suivant la revendication 4, caractérisé par le fait qu'entre la partie supérieure (11,11A) et la partie de retenue (12,12A) est disposé un espace sous pression (112, 112A), dans lequel débouchent, à partir de l'extérieur, un raccord et, à partir de l'espace intérieur, le raccord de pression (21) du capteur de pression (2), et que l'espace sous pression (112,112A) est limité par les parois extérieures de la partie cintrée et par des parois (111,111A) présentes dans la partie supérieure (11,11A) et qui pénètrent dans un élément d'étanchéité (141) situé dans une rainure ménagée dans la partie de retenue (12,12A) et qui entoure extérieurement la partie cintrée pour le capteur de pression (2).

6. Appareil de commande suivant la revendication 2, caractérisé par le fait que le capteur de pression (2) est en appui sur la partie de retenue (12,12A) et est repoussé contre cette dernière par la partie supérieure (11,11A).

7. Appareil de commande suivant la revendication 2, caractérisé par le fait que la partie de retenue (12,12A) est formée par moulage sur la partie inférieure (1,1A).

8. Appareil de commande suivant la revendication 2, caractérisé par le fait que la partie de retenue (12,12A) est reliée à la partie inférieure (1,1A).

**FIG 1**

**FIG 2**

# FIG 3